# FASCICULE DE BREVET EUROPEEN

(11) **EP 3 842 007 B1**
(45) Date de publication et mention de la délivrance du brevet: **20.12.2023**
(21) Numéro de dépôt: 20216016.4
(22) Date de dépôt: 21.12.2020
(51) Int. Cl.: A61C 8/00, A61C 9/00, B33Y 80/00, B33Y 50/00, A61C 13/20

(54) **PILIER DE CICATRISATION ANATOMIQUE IMPLANTAIRE PROVISOIRE**
PROVISORISCHER ANATOMISCHER IMPLANTAT-EINHEILKAPPE
PILLAR FOR TEMPORARY IMPLANT ANATOMICAL HEALING

(30) Priorité: 24.12.2019 LU 101581
(43) Date de publication de la demande: 30.06.2021
(73) Titulaire: Baptista, Augusto André, 5440 Remerschen (LU)
(72) Inventeur: Baptista, Augusto André, 5440 Remerschen (LU)
(74) Mandataire: Office Freylinger

(56) Documents cités:
- EP-A1- 3 009 100
- WO-A1-2012/173945
- WO-A1-2015/189647
- BR-A- 9 604 715
- FR-A1- 3 042 699
- US-A1- 2011 229 850
- US-A1- 2015 182 309
- US-A1- 2018 228 578

## Description

### Domaine technique

La présente invention concerne généralement le domaine de l'implantologie dentaire et plus particulièrement un pilier de cicatrisation anatomique implantaire provisoire.

### Etat de la technique

L'implantologie dentaire est une méthode chirurgicale dont l'objectif est de remplacer une dent manquante due à une extraction. Par conséquent, pour combler le trou dentaire, il s'agit de créer une racine artificielle dans l'os de la mâchoire afin d'y poser ultérieurement une prothèse. Le système implantaire comprend, en général, un implant dentaire qui correspond à la racine artificielle et se présente sous la forme d'une vis fabriquée dans un matériau biocompatible de type titane ou zircone. Au-dessus de la racine artificielle se trouve le pilier prothétique, une pièce en titane servant de liaison entre l'implant dentaire et la dent de remplacement.

Le premier temps opératoire consiste à faire fusionner l'implant à l'os récepteur en ouvrant la muqueuse gingivale. Une période de latence de quatre mois pour la mâchoire inférieure (mandibule) et de six mois environ pour celle supérieure (le maxillaire) est nécessaire avant de passer à l'étape suivante. D'une manière générale, trois mois suffisent si aucune greffe osseuse n'est préconisée. L'ostéo-intégration vise à ce que l'os vienne coloniser l'implant grâce aux cellules osseuses pour s'y fixer durablement et donc pour qu'il n'y ait aucune mobilité de la future dent. Une fois cette étape d'ostéo-intégration réalisée, le praticien pourra prendre l'empreinte dentaire afin de placer la prothèse lorsque la cicatrisation est complète. C'est à l'issue de la période de cicatrisation que le pilier prothétique est mis en place sur l'implant dentaire. Il existe deux types de pilier prothétiques. Soit le pilier prothétique et la couronne se présentent sous la forme de deux pièces séparées, le pilier est alors vissé dans l'implant et la couronne est scellée par un ciment au pilier ; soit le pilier et la couronne forment une même unité jointe qui est alors transvissée dans l'implant. Ce dernier type de pilier prothétique représente une meilleure solution mais doit respecter un axe prothétique idéal de l'implant, c'est-à-dire que le trou de la vis doit sortir au milieu de la face occlusale de la couronne dite transvissée.

Dans le procédé Champions^{®}, l'implant utilisé comprend une pièce intermédiaire, connue sous le nom de «shuttle», monté sur celui-ci et un pilier de cicatrisation, commercialisé sous le nom de «Gingiva-Clix» qui est clipsé sur le shuttle. Le Gingiva-Clix sert de conformateur gingival pour former correctement la muqueuse autour de l'implant. Une fois qu'il y a un bon ancrage de l'implant dans l'os correspondant à la stabilité primaire de l'implant lors de la pose de celui-ci, le couple étant d'un minimum de 35 N.cm, un Gingiva-Clix est clipsé sur le shuttle pendant les 2-3 mois de cicatrisation osseuse. Après cette période, le Gingiva-Clix est retiré pour passer à l'étape de l'empreinte.

A l'étape de l'empreinte, un transfert d'empreinte est fixé ou clipsé dans le shuttle après avoir préalablement retiré le Gingiva-Clix. Ce transfert d'empreinte est moulé avec un matériau d'empreinte (par exemple Impregum) et une empreinte de la mâchoire complète est réalisée au moyen d'un porte-empreinte fermé. Ensuite, un analogue de laboratoire est vissé avec un shuttle et l'ensemble est clipsé sur le transfert d'empreinte resté dans l'empreinte. L'ensemble est donc repositionné dans l'empreinte. Au niveau de la bouche du patient, le Gingiva-Clix est remis en place pour empêcher que la gencive ne change de forme.

Au niveau de l'empreinte, un masque gingival de 1 mm est réalisé autour du shuttle et un modèle en plâtre est fabriqué. Au niveau de ce modèle en plâtre, le transfert d'empreinte et le shuttle sont retirés et remplacés par un pilier. La prothèse sera mise en place sur le pilier.

Lors de la mise en place de la prothèse chez le patient, le Gingiva-Clix ainsi que le shuttle sont retirés et le pilier est mis en place. La couronne est finalement cémentée sur le pilier de manière conventionnelle ou trans-vissée, selon le type de pilier utilisé.

Le procédé Champions^{®} se caractérise ainsi par la présence de cette pièce intermédiaire dite « shuttle ». Le shuttle, positionné dans l'espace transmuqueux, sert d'intermédiaire entre le porte implant et le corps de l'implant. L'avantage de cet intermédiaire réside dans le fait qu'il forme un bloc avec le corps de l'implant et permet, d'une part, la non-contamination du corps de l'implant pendant l'ostéo-intégration car le pilier n'est pas dévissé, et, d'autre part, permet également lors de l'étape de l'empreinte, de réaliser celle-ci sans démontage puisque le transfert d'empreinte est clipsé dans le shuttle. La vitesse d'exécution est, elle-même, grandement facilitée car aucun dévissage/vissage n'est plus nécessaire. Si une greffe osseuse doit être pratiquée afin de combler les espaces de l'alvéole dentaire restés vacants, le shuttle permet également de ne pas projeter de granules de greffe dans le corps interne de l'implant. Enfin, le shuttle est recouvert par le conformateur gingival Gingiva-Clix, qui vient de clipser sur celui-ci.

Le bloc constitué par le corps de l'implant et le shuttle présente donc un avantage significatif pour le patient et pour le praticien, car le protocole est simplifié. Le shuttle forme une protection hermétique aux bactéries jusqu'à la mise en place de la restauration prothétique car il n'y aura plus de réouverture de la gencive pendant la phase prothétique et permet une prévention de la perte osseuse physiologique.

Les piliers de cicatrisation sont généralement connus de l'homme du métier.

Le rôle du pilier de cicatrisation est de guider la cicatrisation de la gencive et de préparer l'émergence de la couronne hors de la gencive. Si le diamètre du pilier de cicatrisation avoisine le diamètre cervical de la couronne à reconstituer, un profil d'émergence naturel sera plus aisément obtenu. Cela s'acquiert avec des piliers de diamètres différents à la base et au sommet. En effet, la section de la couronne à sa partie trans-gingivale, qu'il s'agisse d'une prémolaire, d'une canine, d'une incisive ou d'une molaire, n'est pas circulaire.

Les piliers de cicatrisation conventionnels sont en titane ou en PEEK (polyétheréthercétone). Ces piliers de cicatrisation ont des formes et des dimensions très variés et sont généralement cylindriques et donc pas du tout adaptés à la forme réelle d'une dent. Les piliers se différencient selon le matériau, le type de connexion à l'implant (connexion conique interne, tri-rainure interne, hexagone externe, inter-X), la forme de la plateforme implantaire ("regular", "narrow", "wide"), la hauteur du pilier de cicatrisation, l'angulation du pilier de cicatrisation, le blocage (rotationnel ou anti-rotationnel) ou encore le diamètre (de 3 à 7 mm).

Il y a des cas critiques, comme lors de l'extraction-implantation immédiate (EII) où l'environnement tissulaire autour de l'alvéole d'extraction n'est pas parfaitement cicatrisé et sain car un assainissement préalable n'a pas été assuré. Dans ce cas précis, il est plus difficile d'obtenir un profil d'émergence naturel. L'EII permet de réduire les manipulations sur les tissus mous et de limiter la résorption des tissus durs qui est systématique et importante au cours des six premiers mois après l'extraction. Malheureusement, la forme de l'implant utilisé ne correspond généralement pas à la forme de l'alvéole, et le pilier de cicatrisation est généralement sous dimensionné et d'une forme inappropriée cylindrique, ce qui implique la présence d'un espace au niveau de l'implant et de l'alvéole d'extraction qui devra être comblée par des lambeaux..

Comme déjà mentionné ci-dessus, chez Champions^{®}, le Gingiva-Clix en PEEK, est clipsé sur le shuttle. Le Gingiva-Clix a une forme de capuchon et permet de protéger le shuttle, donc la tête de l'implant, après l'insertion. En effet, le Gingiva-Clix reste lors de la phase de cicatrisation au maximum 180 jours (cas où l'implant nécessite, en plus, une greffe osseuse). Le Gingiva-Clix permet également de former la gencive pendant la phase de cicatrisation. Le Gingiva-Clix a donc un double rôle dont celui de «conformateur gingival» et permet ainsi d'obtenir des solutions très satisfaisantes et de travailler le profil d'émergence de la future prothèse.

Or, les piliers de cicatrisation standard ne permettent pas de fermer complètement l'espace entre le pilier et la gencive. Ceci est d'autant plus vrai dans le cas de l'extraction-implantation immédiate cité ci-dessus. Même si l'utilisation du Gingiva-Clix de Champions^{®} a permis d'obtenir des solutions satisfaisantes, cette solution n'est pas totalement suffisante. Comme déjà mentionné plus haut, si le diamètre du pilier de cicatrisation avoisine le diamètre cervical de la couronne à reconstituer, un profil d'émergence naturel sera plus aisément obtenu, d'où l'importance du choix du pilier de cicatrisation.

Il serait donc souhaitable de disposer d'un pilier de cicatrisation dit anatomique c'est-à-dire épousant la forme exacte de la gencive à l'émergence de l'implant.

Des méthodes de préparation de piliers personnalisés et des capuchons pour la prise d'empreinte dentaire après la phase de cicatrisation, sont connus de WO 2015/189647 A1, US 2011/229850 A1 et EP 3 009 100 A1.

### Objet de l'invention

Un objet de la présente invention est par conséquent de proposer une solution pour permettre la production d'un pilier de cicatrisation dit "anatomique".

La présente invention concerne un procédé de préparation d'un pilier de cicatrisation anatomique selon la revendication 1 et un capuchon pour implant dentaire selon la revendication 8.

### Description générale de l'invention

Afin de résoudre le problème mentionné ci-dessus, la présente invention propose, dans un premier aspect, un procédé de préparation d'un pilier de cicatrisation anatomique pour un implant dentaire dans la gencive d'un patient, l'extrémité émergeante de l'implant étant couverte par un capuchon amovible, le procédé comprenant les étapes suivantes:
a) une étape de prise d'empreinte par application d'une pâte de moulage dans l'espace annulaire entre la gencive et le capuchon, puis extraction du capuchon avec la pâte de moulage formant l'empreinte ; et
b) une étape de préparation d'un moule négatif correspondant à l'empreinte obtenue à l'étape b) ;
c) une étape de moulage dans laquelle le capuchon de l'empreinte (étape a), sans la pâte de moulage durcie (c.-à-d. dont on a enlevé le matériau d' empreinte qui a servi préalablement), ou un autre capuchon similaire ou identique est placé dans le moule négatif et on introduit un matériau de moulage durcissable dans la cavité entre le capuchon et la paroi du moule, le matériau de moulage se fixant ainsi au capuchon et se conformant à la cavité du moule ;
d) retrait, hors du moule, de l'ensemble capuchon et matériau de moulage durci ainsi obtenu du moule, formant ainsi un pilier de cicatrisation anatomique.

Le procédé selon l'invention permet la réalisation d'un pilier de cicatrisation anatomique en 10 - 15 minutes, directement par le praticien lorsque le patient est sur le siège. Il fait appel à des équipements courants du Dentiste. Un mérite de l'invention est d'avoir réalisé que le capuchon de cicatrisation du type chape polymère s'engageant par fixation élastique, notamment clipsage, sur la tête émergeant d'implant peut être mis à profit comme support de matériau de moulage, afin de construire un pilier de cicatrisation anatomique.

Selon l'invention, le terme « capuchon » désigne de manière générale une chape venant couvrir l'extrémité émergeante de l'implant, et qui est amovible. De préférence, le capuchon comprend un corps tubulaire fermé à une extrémité, le corps tubulaire étant configuré pour se fixer de manière amovible sur la tête d'un implant.

Avantageusement, le capuchon comprend une paroi latérale dont la surface extérieure est structurée pour favoriser l'accrochage de matériaux de moulage, en particulier par des reliefs et/ou cavités et/ou croisillons.

Selon un mode de réalisation préféré, le capuchon comprend un corps tubulaire fermé à une extrémité, le corps tubulaire étant configuré pour se fixer de manière amovible sur la tête d'un implant, la surface extérieure du corps tubulaire étant structurée pour favoriser l'accrochage du matériau de moulage.

Le capuchon est avantageusement configuré de sorte à venir recouvrir la tête d'implant (ou pièce intermédiaire d'implant), en prise avec celle-ci, par clipsage amovible. Le terme clipsage désigne conventionnelle un assemblage par lequel on exploite l'élasticité intrinsèque du capuchon pour permettre son montage stable sur l'implant, et son retrait, sans faire intervenir de pièces supplémentaires. Le clipsage est obtenu par déformation élastique des parois tubulaires du capuchon qui va être déformé radialement (expansion/dilatation) sur la tête d'implant, au moins le temps de la mise en place, créant également une friction (frottements). Suivant la configuration, la déformation élastique peut se relâcher (ou pas) une fois assemblé, mais il faudra à nouveau vaincre la force élastique pour déposer le capuchon. Le clipsage peut être facilité par des choix de géométrie ou des formes coopérant entre le corps tubulaire et la tête d'implant. Par exemple on peut prévoir une nervure annulaire et une gorge annulaire coopérant sur l'un et l'autre du capuchon et de l'implant, le capuchon se déformant pour l'insertion de la nervure dans la gorge.

La structuration de surface du corps de capuchon peut comprendre une pluralité de parties en saillie et/ou en retrait, en particulier des rainures, encoches, sillons, saillies, excroissances, ou une combinaison de celles-ci. Le capuchon peut notamment comprendre une pluralité de rainures s'étendant dans la direction circonférentielle, mais non continues (ne formant pas une rainure annulaire), placées à plusieurs niveaux sur la hauteur du capuchon.

On pourra utiliser deux capuchons différents pour l'empreinte (étape a) et la réalisation du pilier de cicatrisation (étape c), ou conserver le même capuchon dont on retire la pâte de moulage durcie. Dans ce dernier cas il est avantageux de dessiner des repères d'indexage sur le dessus du capuchon (ou d'avoir des repère prédéfinis), pour faciliter la mise en place ultérieure.

Dans une variante préférée, le procédé comprend, une étape de détourage du matériau de moulage durci sur le capuchon, avant mise en place dans la bouche. Le cas échéant, on procède également au comblement des contredépouilles et concavité éventuelles de l'intrados du pilier de cicatrisation anatomique ainsi obtenu.

Selon les variantes, à l'étape b) le moule négatif est préparé en entourant le capuchon portant l'empreinte de l'étape a) par un autre matériau de moulage, et retrait du capuchon portant l'empreinte, le capuchon étant de préférence monté sur la tête d'un support, en particulier un analogue d'implant, en particulier sur la pièce intermédaire/shuttle.

Avantageusement, à l'étape c), le matériau de moulage durcissable est un composite 100% biocompatible, en particulier un polymère (résine) photopolymérisable. De préférence, le composite est un matériau utilisé pour obturer et reconstituer les dents qui est constitué de charges minérales noyées dans une matrice organique. Le terme «biocompatible» signifie ici la capacité du matériau à ne pas interférer, ne pas dégrader, le milieu biologique dans lequel il est utilisé. De préférence le composite 100% biocompatible ne contient ni tegdma (triéthylène glycol diméthacrylate), hema
((hydroxyéthyl)méthacrylate), bisgma (bisphénol A-glycidyl méthacrylate) ou bpa (bisphénol A). Un exemple d'un tel composite 100% biocompatible est le produit Purefill Flow commercialisé par Elsodent (France).

Le présent procédé peut être mis en oeuvre sur les implants mono et bi-blocs. Par implants bi-bloc on entend les implants comprenant une vis d'implant sur laquelle est montée une pièce intermédiaire qui sera enlevée à la fin de la période de cicatrisation. Dans le cas de l'implant bi-bloc, la tête d'implant est bien entendu constituée par la pièce intermédiaire (shuttle), sur laquelle vient se positionner le capuchon. Dans le cas d'un implant simple ou monobloc, on peut utiliser une pièce auxiliaire qui vient se fixer sur l'implant et former une tête émergeant de la gencive.

Dans un deuxième aspect, l'invention propose capuchon pour implant dentaire, comprenant un corps tubulaire fermé à une extrémité et ouvert à l'autre, le corps tubulaire étant configuré pour être engagé par son extrémité ouverte sur une partie de tête d'un implant dentaire. Le capuchon se caractérisé en ce que la surface extérieure du corps tubulaire est, au moins sur une partie de la circonférence, structurée de sorte à favoriser l'accrochage de matériau de moulage.

En pratique, la structuration de surface du corps de capuchon peut comprendre une pluralité de parties en saillie et ou en retrait, en particulier des rainures, encoches, sillons, saillies, excroissances, ou une combinaison de celles-ci.

La structuration de surface du corps de capuchon comprend une pluralité le rainures s'étendant dans la direction circonférentielle, mais non continues, placées à plusieurs niveaux sur la hauteur du capuchon.

Selon les variantes, la structuration de surface s'étend essentiellement sur les 2/3 supérieurs du capuchon.

Préférablement, la portion de base du capuchon, du côté de l'extrémité ouverte, est exempte de structuration de surface, en particulier sur une hauteur d'environ 2 mm.

Un tel capuchon de cicatrisation anatomique comprenant des sillons/rainures destiné(e)s à fixer un matériau de moulage présente les avantages suivants:
- les rainures/sillons permettent une très bonne accroche du matériau de moulage,
- le capuchon de cicatrisation anatomique, selon l'invention, permet d'optimiser la cicatrisation implantaire, de baisser le nombre d'intervention ainsi que la durée du traitement.
- plus généralement, il en résulte une morbidité per et post chirurgicale réduite, une facilité du geste peropératoire accrue, des résultats esthétiques accrues ainsi qu'une normalisation et reproductibilité des résultats esthétiques car le capuchon de cicatrisation anatomique se conforme à l'anatomie et à la structure naturelle de l'émergence trans-gingivale de l'ancienne dent extraite.

Avantageusement, le capuchon de cicatrisation anatomique peut être réalisé en matériau plastique, compatible avec une utilisation médicale, et de couleur rose, blanche ou crème. En particulier le capuchon de cicatrisation anatomique peut-être fabriqué à partir d'un matériau polymère bio-compatible, notamment à partir d'un matériau « PEEK » (polyétheréthercétone).

Selon les variantes, le corps de capuchon est configuré pour une fixation amovible, le clipsage recouvrant au sens du présent texte l'emmanchement et/ou l'emboitage élastique, et/ou conjugaison de formes. L'usage de matériaux ayant une certaines élasticité est avantageux dans ce contexte.

### Brève description des dessins

D'autres particularités et caractéristiques de l'invention ressortiront de la description détaillée de quelques modes de réalisation avantageux présentés ci-dessous, à titre d'illustration, en se référant aux dessins annexés. Ceux-ci montrent:
Fig. 1: une vue de face, en coupe partielle, d'un implant bi-bloc conventionnel ;
Fig. 2: une vue schématique d'une réalisation du présent capuchon ;
Fig. 3: une vue schématique de l'implant émergeant de l'alvéole péri-implantaire ;
Fig. 4: une vue schématique de l'implant recouvert par le capuchon de la Fig.2 ;
Fig. 5: une vue schématique de la zone péri-implantaire à l'issue de l'étape de prise d'empreinte ;
Fig. 6: une vue schématique du capuchon portant l'empreinte tel que retiré de l'implant ;
Fig. 7: une vue schématique d'un capuchon de cicatrisation anatomique obtenu après l'étape de moulage ;
Fig. 8: une vue schématique du pilier de cicatrisation anatomique clipsé sur l'implant de la Fig.3 ;
Fig. 9: une vue schématique de l'alvéole péri-implantaire après retrait du pilier de cicatrisation anatomique (fin de cicatrisation) ;
Fig. 10 : une vue schématique d'une variante de réalisation du présent capuchon.

### Description d'une exécution préférée

On décrira ci-après un mode de réalisation du présent procédé dans le contexte de l'extraction-implantation immédiate (EII), mis en oeuvre avec un implant de type bi-bloc, notamment de la société Champions-Implants GmbH (Allemagne).

### 1. Principe de l'implant bi-bloc

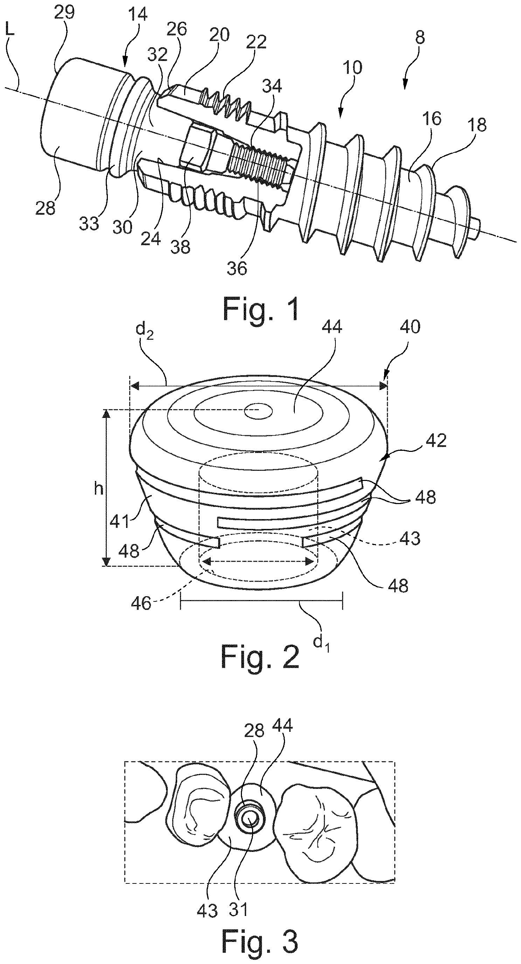

Un tel implant conventionnel bi-bloc, désigné généralement 8, de type Champions^{®} est représenté à la Fig.1. L'implant est composé d'une vis ou corps d'implant 10 -ou simplement implant- formant le bloc principal de l'implant destiné à l'ancrage dans l'os récepteur ; et d'une pièce intermédiaire 14 intégrée, dite aussi «shuttle» ou navette, vissée sur l'implant 10, formant le deuxième bloc. L'implant 10 et la pièce intermédiaire sont conventionnellement réalisés dans un matériau biocompatible, métallique ou céramique, par exemple en titane ou zircone.

L'implant 10 a la forme générale d'une vis et comprend un moyen d'ancrage destiné à s'implanter dans la structure osseuse du patient. Ce moyen d'ancrage est constitué par un filetage extérieur à pas variables. La partie inférieure 16 de l'implant 10, ou partie apicale, c'est-à-dire la partie de l'implant au fond de la structure osseuse, comprend des filets 18 plus larges, tandis que la partie supérieure 20 de l'implant, c'est-à-dire du côté coronal, comprend des filets 22 plus fins.

L'implant 10 comprend, en partie supérieure 20, un passage intérieur 24 borgne s'étendant selon un axe longitudinal L et qui débouche dans la face d'extrémité supérieure 26.

La pièce intermédiaire 14 vient se fixer dans ce passage 24. Elle comprend une tête 28 de forme cylindrique ainsi qu'une tige 30 conçue pour se loger dans le passage 24. La tête 28 comprend dans sa face 29 opposée à la tige 30 une cavité 31 (visible sur la Fig.3) configurée pour coopérer avec un outil de vissage. La tige 30 comprend une portion conique 32 qui s'étend à partir de la base de la tête 28 jusqu'à une partie d'extrémité filetée 34 qui coopère avec un filet 36 dans le passage 24 pour la fixation de la pièce intermédiaire 14 à l'implant 10. La portion conique 32 est interrompue par une pièce de préhension 38. La pièce intermédiaire 14 comprend, en outre, un anneau d'étanchéité 33. L'ensemble formé par l'anneau d'étanchéité 33 ainsi que la surface de la portion conique 32, forme un système d'étanchéité ou joint qui isole l'intérieur de l'implant de l'environnement. En effet, ce système d'étanchéité ou joint est suffisant pour garantir la protection de l'intérieur du corps de l'implant 10 de la contamination par des micro-organismes.

### 2. Le capuchon

La tête 28 de la pièce intermédiaire 12 est configurée pour recevoir un capuchon.

Traditionnellement, le capuchon associé à l'implant Champions^{®} est le gingiva-clix présenté ci-avant. Le capuchon gingiva-clix est une chape en PEEK qui vient se clipser sur la pièce intermédiaire 14. Ce capuchon permet de protéger la pièce intermédiaire et de former la gencive pendant la phase de cicatrisation. Le capuchon gingiva-clix conventionnel constitue donc un pilier de cicatrisation.

On appréciera que le présent procédé utilise un capuchon 40 particulier qui est illustré à la figure 2. Ce capuchon 40 a une configuration générale similaire au capuchon gingiva-clix, en forme de chape et apte à venir en prise avec la tête 28 de la pièce intermédiaire 14 par clipsage. Mais on remarquera que le capuchon 40 possède des parois latérales 41 dont la surface extérieure est structurée afin de favoriser l'accrochage avec des matériaux d'empreinte et de moulage. Le capuchon 40 comprend un corps 42 de forme générale annulaire fermé à une extrémité par un fond 44. Le corps annulaire 42 définit donc une cavité 43 dont le volume intérieur est ouvert vers l'extérieur par une ouverture 46 opposée au fond 44. Le corps 42 peut avoir par exemple une paroi généralement cylindrique ou tronconique.

Dans la variante représentée, la cavité 43 est globalement cylindrique et la paroi annulaire du capuchon 40 est globalement tronconique, de sorte que la face latérale 41 est évasée en direction coronale.

Le capuchon 40 s'enfile par l'ouverture 46 sur la tête 28 de la pièce intermédiaire 14. L'intérieur de la cavité 43 du capuchon 40 est donc configuré en fonction de la géométrie de la tête 28 de la pièce intermédiaire 14, notamment pour être en prise avec celle-ci, de manière amovible. En particulier il est souhaitable que le capuchon se fixe par clipsage, sur la pièce intermédiaire. A cet effet on choisira avantageusement pour le capuchon un matériau compatible avec un usage dentaire et présentant une certaine élasticité, comme par exemple le PEEK. Le capuchon est donc configuré pour être clipsable sur la pièce sur laquelle il vient se fixer de manière amovible (ici la pièce intermédiaire). On joue sur les dimensions du capuchon 40 et l'élasticité du matériau, pour avoir une bonne tenue, une fois engagé sur la pièce intermédiaire, tout en permettant une pose/dépose facile grâce au clipsage. L'effet de clipsage est notamment obtenu par déformation élastique et la friction sur la tête de l'implant.

Dans la variante illustrée, la structuration de la surface extérieure 41 de la paroi du corps 42 du capuchon 40 est réalisée par une pluralité de rainures 48 s'étendant sur une partie de la périphérie.

De préférence, les rainures 48 ne font pas un tour complet autour du capuchon 40. Les rainures sont disposées à plusieurs niveaux sur la hauteur h du capuchon, et sont décalées. Cela permet un bon accrochage de la matière (pâtes et matériaux de moulage et d'empreinte), avec un blocage vertical et circonférentiel.

En outre, la partie inférieure du capuchon est préférablement exempte de structuration, par exemple sur les 2 premiers millimètres. Les rainures sont par exemples disposées sur les 2/3 ou 3/4 supérieurs de la hauteur h.

Les rainures, encoches ou entailles, peuvent être traversantes et/ou non-traversantes. Les rainures non-traversantes ont l'avantage que la matière ne peut pénétrer dans la cavité intérieure 43 (de fixation) du capuchon 40.

Ces rainures 48 peuvent être réalisées simplement par le praticien à partir d'un capuchon en PEEK, dont on vient attaquer les parois avec un outil pointu, par exemple une fraise de dentiste, pour y former des entailles, encoches ou rainures. Il est toutefois préférable de réaliser les entailles, ou de manière générale la structuration, lors de la fabrication du capuchon. La structuration de surface peut résulter de l'élaboration du capuchon, par exemple si le capuchon est fabriqué par moulage, mais peut également être obtenue par usinage subséquent.

Dans certaines réalisations, le fond 44 du capuchon peut comprendre un couvercle amovible qui permet d'accéder à la cavité 31 dans la tête 28 de la pièce intermédiaire, sans retirer le capuchon.

De manière générale, le capuchon peut être décliné en plusieurs tailles, avec une hauteur h de l'ordre de 5 à 11 mm, un diamètre d1 à sa base de l'ordre de 4,5 mm à 7 mm, et un diamètre supérieur d2 de 5 à 8 mm. Le diamètre intérieur de la cavité 43 est adapté à la pièce intermédiaire est peut être typiquement de l'ordre de 3,5 à 5,5 mm. La profondeur de la cavité 43 peut être de 3 à 5 mm.

Les rainures 48 peuvent avoir une largeur de l'ordre de 1 à 1,5 mm et une profondeur de 0,5 à 1 mm.

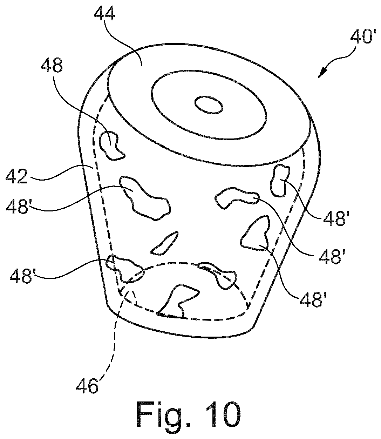

La Fig.10 présente une variante de réalisation du capuchon 40' dans laquelle la structuration est réalisée au moyen d'entailles 48' distribuées sur la surface extérieure du capuchon.

### 3. Mise en place de l'implant

Le présent exemple vise le cas particulier de l'extraction-implantation immédiate (EII), dans lequel le praticien place un implant dans l'alvéole vide (ou sulcus péri-implantaire) aussitôt après l'extraction dentaire. En effet, de manière connue, le praticien extrait une dent en veillant à ce que l'extraction se déroule de manière atraumatique, c'est-à-dire avec un minimum d'intervention sur les tissus mous et en prenant soin de préserver la table osseuse vestibulaire. Le praticien effectue un curetage soigneux de l'alvéole ainsi qu'éventuellement un rinçage par exemple à la bétadine en cas de foyers infectieux. L'intégralité des parois osseuses est vérifiée.

Le forage est ensuite réalisé et l'implant est mis en place. Dans le présent exemple, le praticien visse donc l'implant de la Fig.1 dans l'alvéole résultant de l'extraction. La forme de l'implant ne correspond généralement pas à la forme de l'alvéole, ce qui implique la présence d'un espace entre l'implant et la paroi osseuse. Quelle que soit la taille du hiatus, il est donc souvent nécessaire de le combler avec de l'os autogène ou un substitut osseux associé ou non à la membrane. Une fois l'implant en place, celui-ci à une stabilité primaire supérieure à 30 N.cm. L'implantation immédiate est ainsi réalisée dans le site d'extraction qui n'a subi aucune cicatrisation des tissus osseux et mous. L'EII permet ainsi de:
- limiter la perte osseuse car la résorption osseuse peut rendre impossible la mise en place de l'implant,
- de préserver l'esthétique par la conservation de la table osseuse vestibulaire et la conformisation de l'émergence anatomique naturelle de la dent par le pilier anatomique de cicatrisation,
- de profiter de l'intense vascularisation crée par l'extraction afin d'optimiser la cicatrisation et,
- de réduire le temps de traitement.

### 4. Description du présent procédé

On décrira maintenant à l'aide des figures 3 à 9 le déroulé du présent procédé de fabrication d'un pilier de cicatrisation anatomique.

La figure 3 illustre un implant Champions^{®} « bibloc » du type de la Fig.1 intégré dans la gencive du patient juste après l'extraction dentaire, conformément à la pratique EII exposée ci-avant. C'est à partir de cette configuration qu'est mis en oeuvre le présent procédé. On notera que conformément à la pratique des implants biblocs, une fois installé, l'extrémité coronale de l'implant 10 (face d'extrémité 26) se trouve en position sous-crestale, alors que la pièce intermédiaire 14 dépasse légèrement de la gencive. Egalement dans la configuration de la Fig.3, le praticien a typiquement déjà procédé à un comblement de l'alvéole d'extraction, tel que mentionné ci-avant. On place par exemple un matériaux de comblement osseux type os synthétique (par ex,. OsteoBiol Gen-Os) dans l'espace des anciennes racines de la dent extraite et une membrane de PRF (concentré plaquettaire autogène) autour de la pièce intermédiaire épousant la forme de l'alvéole pour éviter que le matériau d'empreinte (voir ci-après) ne colle aux particules d'os.

Dans la figure 3, on distingue simplement la tête 28 de la pièce intermédiaire 14 qui émerge de la gencive. L'implant, respectivement la pièce intermédiaire 14, se trouve au milieu de l'alvéole 43 creusée par l'extraction et est entouré d'un espace 44 situé entre l'implant et la paroi osseuse, resp. gencive, au dessus de la partie déjà comblée. Cet espace annulaire 44 n'est pas régulier sur la circonférence, et dépend des conditions de l'extraction et du comblement qui aura pu être effectué.

Le présent procédé vise à fabriquer un pilier de cicatrisation sur mesure, donc dépendant de la configuration particulière de l'espace annulaire 44, ou plus spécifiquement l'espace biologique péri-implantaire, séparant la gencive de la tête 28 de la pièce intermédiaire 14. On parle donc de pilier de cicatrisation anatomique.

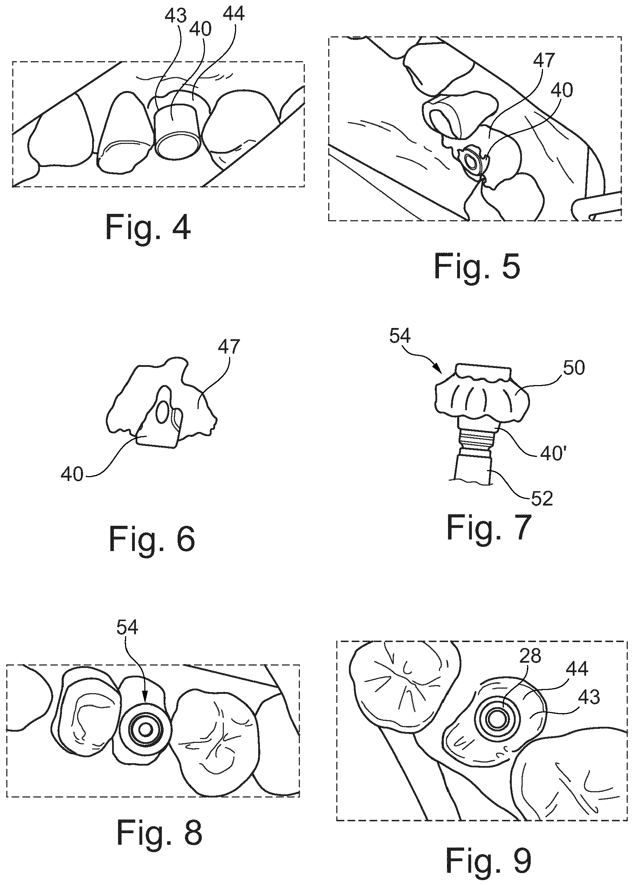

Pour ce faire, on utilise dans le présent procédé le capuchon structuré 40 de la Fig.2. La figure 4 montre le capuchon 40 engagé sur tête 28 de l'implant 10 dans la bouche du patient. On y voit également l'espace annulaire 44 situé entre l'implant et la gencive, quelque peu réduit par rapport à la Fig.3 en raison de l'épaisseur du capuchon 40.

A partir de la fixation du capuchon 40 sur la pièce intermédiaire 14 de l'implant 10, le procédé de préparation d'un pilier de cicatrisation anatomique selon l'invention se déroule comme suit.

### 4.1. Prise d'empreinte :

Un premier matériau de moulage, ou pâte de moulage 47 (par exemple une pâte silicone), est appliquée dans l'espace annulaire 44 se trouvant entre la gencive et le capuchon 40, comme illustré à la figure 5. La pâte de moulage 47 est appliquée de sorte à entourer le capuchon 40 dans le sillon péri-implantaire 44. La surface structurée du capuchon 40 permet un bon accrochage de la pâte de moulage 47 aux parois latérales de celui-ci. Notamment, les encoches 48 prévues dans la paroi du capuchon 40 créent une interface rugueuse. La pâte de moulage 47 pénètre également dans les encoches 48, ce qui permet une meilleure adhésion.

Cette étape va donc permettre de mouler parfaitement l'espace se trouvant entre la gencive et le capuchon 40 et donc d'obtenir une empreinte précise de la gencive au niveau de l'espace annulaire 44.

Une fois la pâte de moulage 47 durcie (au moins partiellement), le capuchon 40 est retiré de la bouche avec l'empreinte en pâte de moulage 47. Cet ensemble est représenté en Fig. 6.

Aux fins d'indexation, le capuchon 40 peut comporter un ou plusieurs repères, par exemple une croix. Une fois l'empreinte en place, le praticien trace le prolongement de ce(s) repère(s) sur les dents adjacentes. Cela permettra, à la réinsertion, de faire correspondre les indexations.

### 4.2. Préparation d'un moule négatif :

Une fois l'empreinte obtenue, l'étape suivante consiste à réaliser un moule négatif de l'empreinte.

Dans cette étape, le capuchon 40 avec l'empreinte en pâte de moulage 47 est préférablement posé sur un analogue d'implant (sur la pièce intermédiaire), puis l'ensemble est introduit dans un moule rempli d'un matériau de moulage (non représentés). Le capuchon 40 avec empreinte 47 porté par l'analogue d'implant est pressé dans le matériau de moulage pour épouser le profil de l'empreinte 47. L'analogue d'implant est ici utilisé pour faciliter la manipulation du capuchon 40 et garder sa forme.

L'ensemble empreinte-analogue est retiré du moule, qui présente alors une forme négative de l'empreinte du capuchon 40.

Avant l'introduction dans le moule rempli d'un matériau de moulage, l'empreinte en pâte de moulage 47 fixée au capuchon 40 est de préférence enduite de vaseline, ou huile équivalent, pour éviter toute adhérence avec le matériau de moulage.

Dans cette étape, tout matériau de moulage approprié peut être utilisé, en particulier les matériaux conventionnels tels que les silicones bio-compatibles pour moulages et empreintes dentaires..

Pour l'empreinte (étape précédente 4.1), on peut utiliser une pâte de moulage type un silicone fluide type léger, par exemple Hydrorise Light Body (de Zhermak). Pour le moule en négatif, on pourra utiliser un silicone moins fluide dit « putty », par exemple Hydrorise Heavy Body. Les couleurs des matériaux d'empreinte et de moulage sont de préférence différentes, pour faciliter la manipulation.

### 4.3. Moulage du pilier de cicatrisation anatomique

Un autre capuchon structuré, identifié 40', identique ou similaire au capuchon de la Fig.2 est ensuite utilisé. Ce capuchon 40' est neuf, c'est-à-dire non-utilisé et normalement stérile. Le nouveau capuchon 40' structuré est mis en place sur l'analogue d'implant dans le moule négatif obtenu précédemment (non représenté). Un deuxième matériau de moulage est introduit pour combler l'espace de moule entre la paroi en négatif et le capuchon 40'. Ici à nouveau, la structuration du capuchon 40' permet un bon accrochage du matériau de moulage à la paroi latérale du capuchon 40'.

Le deuxième matériau de moulage est préférablement un composite biocompatible. On pourra par exemple utiliser un composite dont le durcissement est obtenu par polymérisation, notamment photo-polymérisation. On pourra ici utiliser des produits classiques, par exemple le composite « PureFill Flow » des laboratoires Elsodent (France). Le durcissement de ce composite est aisément réalisé par photo-polymérisation rapide - typiquement en 20 s avec une lampe classique d'une puissance minimale de 500 mW/cm².

Après durcissement du deuxième matériau, le capuchon 40' obtenu comprenant le deuxième matériau de moulage 50, est retiré du moule avec l'analogue d'implant 52 qui le supporte. C'est ce qui est illustré à la figure 7 (l'analogue d'implant 52 est seulement partiellement représenté). Cet ensemble constitué par le capuchon 40' avec le matériau moulé 50 solidifié constitue donc un pilier de cicatrisation anatomique, que l'on identifiera ci-après 54.

Avantageusement, une couche d'adhésif a été préalablement appliquée et photopolymérisée sur la surface du capuchon rainuré 40 et ce avant l'application du composite, ceci afin d'améliorer l'adhérence entre le PEEK et le composite.

De préférence, le matériau moulé 50 est détouré, afin d'enlever l'excès de matériau sur le pourtour et le dessus (côté ne venant pas en contact avec la gencive). De préférence, on procède également au comblement des contredépouilles et concavités éventuelles de l'intrados du pilier de cicatrisation anatomique ainsi réalisé avec le composite.

On notera que dans cette étape il est également possible, au lieu de prendre un capuchon neuf, de réutiliser le capuchon 40, duquel on aura retiré l'empreinte solidifiée 47.

### 4.4. Mise en place du pilier de cicatrisation anatomique :

Le pilier de cicatrisation anatomique 54 obtenu à l'étape précédente peut maintenant être mis en place sur l'implant dans la bouche du patient. Le pilier 54 est détaché de l'analogue d'implant et engagé, de manière classique, sur la tête de la pièce intermédiaire qui émerge de la gencive. C'est ce qu'on peut observer sur la Fig.8. Le pilier anatomique 54 y restera en place pendant plusieurs semaines.

Le cas échéant, le pilier 54 est positionné par rapport aux repère d'indexations tracés sur les dents adjacentes, tel qu'expliqué précédemment.

Après cicatrisation, le pilier de cicatrisation anatomique 54 est retiré. La figure 9 illustre parfaitement le fait que grâce au pilier de cicatrisation anatomique 54 un profil d'émergence naturel est très facilement obtenu. L'environnement tissulaire autour de l'alvéole d'extraction est parfaitement sain et cicatrisé.

Le pilier de cicatrisation anatomique 54, selon l'invention, permet ainsi:
- d'optimiser la cicatrisation implantaire,
- de baisser le nombre d'intervention ainsi que la durée du traitement,
- d'accroitre la facilité du geste peropératoire,
- d'accroitre les résultats esthétiques, et
- la normalisation et la reproductibilité des résultats esthétiques car le capuchon de cicatrisation anatomique se conforme à l'anatomie et à la structure naturelle de l'émergence trans-gingivale de l'ancienne dent extraite.

La mâchoire du patient est maintenant prête pour la réalisation des étapes suivantes de constitution de la future couronne. Conventionnellement, les étapes suivantes sont donc : prise d'empreinte avec un pilier de transfert, par exemple de type « pick up », puis mise en place de la prothèse.

## Revendications

1. Procédé de préparation d'un pilier de cicatrisation anatomique pour un implant dentaire (10) implanté dans la gencive d'un patient, l'extrémité (28) émergeante de l'implant étant couverte par un capuchon (40) amovible, le procédé comprenant :
a) une étape de prise d'empreinte par application d'une pâte de moulage (47) dans l'espace annulaire (40) entre la gencive et le capuchon, puis extraction du capuchon avec la pâte de moulage formant l'empreinte ; et
b) une étape de préparation d'un moule négatif correspondant à l'empreinte obtenue à l'étape b) ;
c) une étape de moulage dans laquelle le capuchon (40) sans la pâte de moulage durcie, ou un autre capuchon similaire ou identique, est placé dans le moule négatif et on introduit un matériau de moulage (50) durcissable dans la cavité entre le capuchon et la paroi du moule, le matériau de moulage (50) se fixant ainsi au capuchon et se conformant à la cavité du moule ;
d) retrait, hors du moule, de l'ensemble capuchon et matériau de moulage durci, formant ainsi un pilier de cicatrisation anatomique (54) ;
dans lequel le capuchon (40) à l'étape a) et/ou c) comprend un corps tubulaire fermé à une extrémité et ouvert à l'autre, le corps tubulaire étant configuré pour être engagé, par clipsage, par son extrémité ouverte sur une partie de tête d'un implant dentaire, dans lequel la surface extérieure du corps tubulaire est, au moins sur une partie de la circonférence, structurée de sorte à favoriser l'accrochage de matériau de moulage.

2. Procédé selon la revendication 1, dans lequel à l'étape b) le moule négatif est préparé en entourant le capuchon (40) portant l'empreinte (47) de l'étape a) par un autre matériau de moulage, et retrait du capuchon portant l'empreinte, le capuchon étant de préférence monté sur la tête d'un support, en particulier un analogue d'implant.

3. Procédé selon la revendication 1 ou 2, dans lequel la structuration de surface du corps de capuchon comprend une pluralité de parties en saillie et/ou en retrait, en particulier des rainures, encoches, sillons, saillies, excroissances, ou une combinaison de celles-ci.

4. Procédé selon la revendication 3, dans lequel le capuchon comprend une pluralité de rainures (48) s'étendant dans la direction circonférentielle, mais non continues, placées à plusieurs niveaux sur la hauteur du capuchon.

5. Procédé selon l'une quelconque des revendications précédentes, dans lequel le matériau de moulage durcissable est un composite biocompatible, en particulier exempt de tegdma, bisgma, hema et bpa.

6. Procédé selon l'une quelconque des revendications précédentes, comprenant, en outre, une étape de détourage du matériau de moulage durci sur le capuchon.

7. Procédé selon l'une quelconque des revendications précédentes, dans lequel le capuchon est configuré pour s'engager sur un implant monobloc, surmonté d'une pièce auxiliaire émergeant de la racine, ou sur la pièce intermédiaire d'un implant bi-bloc.

8. Capuchon pour implant dentaire, comprenant un corps tubulaire fermé à une extrémité et ouvert à l'autre, le corps tubulaire étant configuré pour être engagé de manière amovible, par clipsage, par son extrémité ouverte sur une partie de tête d'un implant dentaire ; **caractérisé en ce que** la surface extérieure du corps tubulaire est, au moins sur une partie de la circonférence, structurée de sorte à favoriser l'accrochage de matériau de moulage, la structuration de surface du corps de capuchon comprenant une pluralité de rainures s'étendant dans la direction circonférentielle, mais non continues, placées à plusieurs niveaux sur la hauteur du capuchon.

9. Capuchon selon la revendication 8, dans lequel la structuration de surface s'étend essentiellement sur les 2/3 supérieurs du capuchon.

10. Capuchon selon l'une quelconque des revendications 8 à 9, dans lequel la portion de base du capuchon, du côté de l'extrémité ouverte, est exempte de structuration de surface, de préférence sur une hauteur d'environ 2 mm.

11. Capuchon selon l'une quelconque des revendications 8 à10, dans lequel le capuchon est réalisé en matériau polymère, en particulier en PEEK.

12. Capuchon selon l'une quelconque des revendications 8 à 11, comprenant un ou plusieurs repères d'indexation.

13. Kit implantaire comprenant au moins :
- un capuchon selon l'une des revendications 8 à 12, et
- un implant dentaire.

## Patentansprüche

1. Verfahren zum Herstellen eines anatomischen Gingivaformers für ein Zahnimplantat (10), das in das Zahnfleisch eines Patienten implantiert ist, wobei das über das Implantat herausragende Ende (28) von einer abnehmbaren Kappe (40) bedeckt ist, wobei das Verfahren umfasst:
a) einen Schritt zum Nehmen eines Abdrucks durch Aufbringen einer Abformpaste (47) in dem ringförmigen Raum (40) zwischen dem Zahnfleisch und der Kappe und zum anschließenden Abziehen der Kappe mit der den Abdruck bildenden Abformpaste; und
b) einen Schritt zum Herstellen einer Negativform, die dem Abdruck entspricht, der in Schritt b) erhalten wird;
c) einen Schritt zum Abformen, wobei die Kappe (40) ohne die ausgehärtete Abformpaste, oder eine andere ähnliche oder identische Kappe, in der Negativform platziert wird und ein aushärtbares Abformmaterial (50) in den Hohlraum zwischen der Kappe und der Wand der Form eingebracht wird, wobei sich so das Abformmaterial (50) an der Kappe fixiert und sich dem Hohlraum der Form anpasst;
d) Entfernen, aus der Form, der Einheit aus Kappe und ausgehärtetem Abformmaterial, wodurch ein anatomischer Gingivaformer (54) gebildet wird:
bei dem die Kappe (40) in Schritt a) und/oder c) einen röhrenförmigen Körper umfasst, der an einem Ende offen und an dem anderen Ende geschlossen ist, wobei der röhrenförmige Körper ausgebildet ist, um, durch Einrasten, über sein offenes Ende mit einem Kopfteil eines Zahnimplantats in Eingriff gebracht zu werden, wobei die äußere Oberfläche des röhrenförmigen Körpers, wenigstens über einen Teil des Umfangs, strukturiert ist, um die Verankerung von Abformmaterial zu begünstigen.

2. Verfahren nach Anspruch 1, bei dem in Schritt a) die Negativform hergestellt wird, indem die Kappe (40), die den Abdruck (47) aus Schritt a) trägt, von einem anderen Abformmaterial umgeben wird und die Kappe, die den Abdruck trägt, entfernt wird, wobei die Kappe bevorzugt auf dem Kopf eines Trägers, insbesondere einem Implantatanalog, montiert wird.

3. Verfahren nach Anspruch 1 oder 2, bei dem die Oberflächenstrukturierung des Kappenkörpers eine Mehrzahl von vorspringenden und/oder zurückgezogenen Teilen umfasst, insbesondere Nuten, Kerben, Furchen, Vorsprünge, Auswüchse oder eine Kombination aus diesen.

4. Verfahren nach Anspruch 3, bei dem die Kappe eine Mehrzahl von Nuten (48) umfasst, die sich in der Umfangsrichtung erstrecken, jedoch nicht durchgängig sind, und die in verschiedenen Höhen auf der Höhe der Kappe platziert sind.

5. Verfahren nach einem der vorhergehenden Ansprüche, bei dem das aushärtbare Abformmaterial ein biokompatibles Komposit ist, insbesondere ohne TEGDMA, BisGMA, HEMA und BPA.

6. Verfahren nach einem der vorhergehenden Ansprüche, ferner umfassend, einen Schritt zum Beschneiden des auf der Kappe ausgehärteten Abformmaterials.

7. Verfahren nach einem der vorhergehenden Ansprüche, bei dem die Kappe ausgebildet ist, um mit einem Monoblock-Implantat, das von einem Hilfsteil überragt wird, das aus der Wurzel herausragt, oder mit dem Zwischenteil eines Biblock-Implantats in Eingriff zu kommen.

8. Kappe für Zahnimplantat umfassend einen röhrenförmigen Körper, der an einem Ende offen und an dem anderen Ende geschlossen ist, wobei der röhrenförmige Körper ausgebildet ist, um abnehmbar, durch Einrasten, über sein offenes Ende mit einem Kopfteil eines Zahnimplantats in Eingriff gebracht zu werden, **dadurch gekennzeichnet, dass** die äußere Oberfläche des röhrenförmigen Körpers, wenigstens über einen Teil des Umfangs, strukturiert ist, um die Verankerung von Abformmaterial zu begünstigen, wobei die Oberflächenstrukturierung des Kappenkörpers eine Mehrzahl von Nuten umfasst, die sich in der Umfangsrichtung erstrecken, jedoch nicht durchgängig sind, und die in verschiedenen Höhen auf der Höhe der Kappe platziert sind.

9. Kappe nach Anspruch 8, wobei die Oberflächenstrukturierung sich im Wesentlichen über die oberen 2/3 der Kappe erstreckt.

10. Kappe nach einem der Ansprüche 8 bis 9, wobei der Basisteil der Kappe, auf der Seite des offenen Endes, keine Oberflächenstrukturierung aufweist, bevorzugt auf einer Höhe von etwa 2 mm.

11. Kappe nach einem der Ansprüche 8 bis 10, wobei die Kappe aus einem Polymermaterial realisiert ist, insbesondere aus PEEK.

12. Kappe nach einem der Ansprüche 8 bis 11, umfassend eine oder mehrere Indizierungskerben.

13. Implantat-Kit wenigstens umfassend:
- eine Kappe nach einem der Ansprüche 8 bis 12 und
- ein Zahnimplantat.

## Claims

1. A method of preparing an anatomical healing abutment for a dental implant (10) implanted in a patient's gum, the emerging end (28) of the implant being covered by a removable cap (40), the method comprising:
a) an impression-taking step involving application of a moulding paste (47) in the annular space (40) between the gum and the cap, then extraction of the cap with the moulding paste forming the impression; and
b) a step wherein a negative mould is prepared which corresponds to the impression obtained in step b);
c) a moulding step wherein the cap (40) without the cured moulding paste, or another similar or identical cap is placed in the negative mould and a curable moulding material (50) is introduced into the cavity between the cap and the wall of the mould, the moulding material (50) thus being fixed to the cap and conforming to the cavity of the mould;
d) removal, from the mould, of the assembly comprising cap and cured moulding material, so forming an anatomical healing abutment (54);
wherein, in step a) and/or c), the cap (40) comprises a tubular body closed at one end and open at the other, the tubular body being configured to be engaged by snapping-on of its open end onto a head part of a dental implant, wherein the outer surface of the tubular body is textured, at least over part of the circumference, so as to promote moulding material attachment.

2. A method according to claim 1, wherein, in step b), the negative mould is prepared by surrounding the cap (40) bearing the impression (47) of step a) with another moulding material, and removal of the cap bearing the impression, the cap preferably being fitted to the head of a support, in particular an implant analogue.

3. A method according to claim 1 or 2, wherein the surface texturing of the cap body comprises a plurality of protruding and/or recessed parts, in particular grooves, notches, furrows, projections, bumps or a combination thereof.

4. A method according to claim 3, wherein the cap comprises a plurality of grooves (48) extending circumferentially, but not continuously, and placed at a plurality of levels over the height of the cap.

5. A method according to any one of the preceding claims, wherein the curable moulding material is a biocompatible composite, in particular free of TEGDMA, BisSGMA, HEMA and BPA.

6. A method according to any one of the preceding claims, further comprising a step of trimming the cured moulding material on the cap.

7. A method according to any one of the preceding claims, wherein the cap is configured to engage on a one-piece implant, surmounted by an auxiliary part emerging from the root, or on the intermediate part of a two-piece implant.

8. A cap for a dental implant, comprising a tubular body closed at one end and open at the other, the tubular body being configured for removable snap-on engagement of its open end onto a head part of a dental implant, **characterised in that** the outer surface of the tubular body is textured, at least over part of the circumference, so as to promote moulding material attachment, the surface texturing of the cap body comprising a plurality of grooves extending circumferentially, but not continuously, and placed at a plurality of levels over the height of the cap.

9. A cap according to claim 8, wherein the surface texturing extends substantially over the upper 2/3 of the cap.

10. A cap according to either one of claims 8 to 9, wherein the base portion of the cap, at the open end, is free of surface texturing, preferably over a height of approximately 2 mm.

11. A cap according to any one of claims 8 to 10, wherein the cap is made of polymer material, in particular PEEK.

12. A cap according to any one of claims 8 to 11, comprising one or more index marks.

13. An implant kit comprising at least:
- one cap according to any one of claims 8 to 12, and
- one dental implant.
